# EUROPEAN PATENT APPLICATION

(11) **EP 4 043 697 A1**
(43) Date of publication of application: **17.08.2022**
(21) Application number: 22151029.0
(22) Date of filing: 11.01.2022
(51) Int. Cl.: F01D 17/02, F01D 21/00, F01D 5/00, G06T 7/00

(54) **INSPECTION ASSISTANT FOR AIDING VISUAL INSPECTIONS OF GAS TURBINE ENGINES**

(30) Priority: 28.01.2021 US 202117160825
(71) Applicant: General Electric Company, Schenectady, NY 12345 (US)
(72) Inventor: WANG, Peng, Shanghai, 201203 (CN); HAN, Jie, Shanghai, 201203 (CN); TAO, Li, Shanghai, 201203 (CN); GU, Xiang, Shanghai, 201203 (CN)
(74) Representative: Openshaw & Co.

(57) **Abstract**

A digital inspection assistant and a system and a method of using the inspection assistant as an aid during a visual inspection of a gas turbine engine are provided. In one aspect, the inspection assistant receives data that includes images captured by an optical probe installed through an access port of a gas turbine engine. The images can be still images or video of the interior of a core of the engine. A gateway can route the data to the inspection assistant. The inspection assistant can provide interactive inspection guidance to an operator and can detect component defects. The inspection assistant can provide real time defect analysis to the operator by generating an alert upon detection of a defect. The generated alert can be audible, a visual graphic presented on a display of the visual inspection, and/or some other suitable alert. The analysis results can assist the operator during inspection.

## Description

### FIELD

The present subject matter relates generally to visual inspections of gas turbine engines, and more particularly, to a digital inspection assistant that aids an operator during visual inspection of a gas turbine engine.

### BACKGROUND

A gas turbine engine typically includes a turbomachinery core having a high pressure compressor, combustor, and high pressure turbine arranged in a serial flow relationship. The core is operable to generate a primary gas flow. The high pressure compressor includes annular arrays ("rows") of stationary vanes that direct incoming air into downstream, rotating blades of the compressor. Collectively one row of compressor vanes and one row of compressor blades make up a "stage" of the compressor. Similarly, the high pressure turbine includes annular rows of stationary nozzle vanes that direct the gases exiting the combustor into downstream, rotating blades of the turbine. Collectively one row of nozzle vanes and one row of turbine blades make up a "stage" of the turbine. The compressor and/or turbine can include a plurality of successive stages.

In order to allow for periodic inspection of the components of the core engine, borescope ports are typically provided in the engine casings and/or frames. Optical borescope instruments can be inserted through such ports into the core to enable a visual inspection of the engine without requiring disassembly of the engine components. Data obtained during an inspection is typically processed offline, e.g., to identify if any defects are present in the inspected components. The inventors of the present disclosure have invented a digital inspection assistant to aid operators during visual inspections of such components and gas turbine engines generally.

### BRIEF DESCRIPTION

Aspects and advantages of the invention will be set forth in part in the following description, or may be obvious from the description, or may be learned through practice of the invention.

In one aspect, a system is provided. The system includes an optical system having an optical probe and a monitor communicatively coupled with the optical probe. The optical probe is insertable through an access port of a gas turbine engine and configured to capture images of an interior of the gas turbine engine at a location associated with the access port. The system also includes an inspection assistant communicatively coupled with the optical system. The inspection assistant has a human-machine interface, one or more processors, and one or more memory devices. The one or more processors of the inspection assistant are configured to: (a) receive data including images captured by the optical probe, the images captured by the optical probe providing internal views of the gas turbine engine; (b) cause the images to be displayed on the human-machine interface; (c) detect one or more defects associated with one or more components of the gas turbine engine; and (d) generate an alert indicating that a defect associated with a component of the gas turbine engine is detected, and wherein the one or more processors of the inspection assistant (a) receive, (b) cause, (c) detect, and (d) generate the alert in real time.

In another aspect, an inspection assistant for aiding an operator during a visual inspection of a gas turbine engine is provided. The inspection assistant includes a human-machine interface having a display, one or more memory devices, and one or more processors. The one or more processors of the inspection assistant are configured to: (a) receive data including images captured of an interior of a core engine of the gas turbine engine; (b) cause the images to be displayed on the display of the human-machine interface; (c) detect one or more defects associated with one or more components of the core engine; and (d) generate an alert indicating that a defect associated with a component of the gas turbine engine is detected, and wherein the one or more processors of the inspection assistant (a) receive, (b) cause, (c) detect, and (d) generate in real time.

In yet another aspect, a method of visually inspecting a gas turbine engine is provided. The method includes capturing images of an interior of a core engine of the gas turbine engine with an optical probe installed through an access port of the gas turbine engine. The method also includes receiving, by an inspection assistant, data that includes the images of the interior of the core engine. Further, the method includes displaying, by the inspection assistant, the images on a display of the inspection assistant. The method also includes detecting, by the inspection assistant, one or more defects associated with one or more components of the core engine. Moreover, the method includes generating, by the inspection assistant, an alert indicating that a defect associated with a component of the core engine is detected. The capturing, the receiving, the displaying, the detecting, and the generating occur in real time.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 provides a schematic cross-sectional view of one embodiment of a gas turbine engine that may be mounted to an aircraft in accordance with exemplary aspects of the present subject matter;
FIG. 2 provides a cross-sectional view of one embodiment of a turbine suitable for use within the gas turbine engine of FIG. 1 depicting access ports defined in the engine for providing internal access to the turbine;
FIG. 3 provides a partial, cross-sectional view of one embodiment of a compressor suitable for use within the gas turbine engine shown in FIG. 1, particularly illustrating access ports defined in the engine for providing internal access to the compressor;
FIG. 4 provides a simplified view of one embodiment of an optical probe that may be used in accordance with aspects of the present subject matter to visually inspect a gas turbine engine;
FIG. 5 provides a schematic view of an example visual inspection system according to one embodiment of the present subject matter;
FIG. 6 provides a schematic view of an inspection assistant displaying real time images of an interior of a gas turbine engine according to one embodiment of the present subject matter;
FIG. 7 provides a flow diagram of an example method according to one example embodiment of the present subject matter; and
FIG. 8 provides a schematic view of a computing system for implementing one or more aspects of the present disclosure according to example embodiments of the present subject matter.

### DETAILED DESCRIPTION

Reference will now be made in detail to present embodiments of the invention, one or more examples of which are illustrated in the accompanying drawings. Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of any claims and their equivalents.

The detailed description uses numerical and letter designations to refer to features in the drawings. Like or similar designations in the drawings and description have been used to refer to like or similar parts of the invention, and identical numerals indicate the same elements throughout the drawings. As used herein, the terms "first", "second", and "third" may be used interchangeably to distinguish one component from another and are not intended to signify location or relative importance of the individual components. Furthermore, as used herein, the term "real time" refers to collection of predetermined data, the time to process the data, and the time of a system response to the events and the environment. In the embodiments described herein, these activities and events occur effectively instantaneously.

Aspects of the present disclosure are directed to a digital inspection assistant for aiding an operator during a visual inspection of a gas turbine engine. In one example aspect, an optical probe of an optical system is installed through an access port of a gas turbine engine. The optical probe can capture images, such as still images or video, of the interior of a core of the gas turbine engine. The optical system can be a borescope or borescope system, for example. An Artificial Intelligence (AI) adaptor is communicatively coupled with the optical system. The AI adaptor includes a gateway and an inspection assistant communicatively coupled thereto. The gateway accesses or otherwise obtains data from the optical system, including images captured by the optical probe. The gateway provides the data to the inspection assistant for real-time analysis. The gateway can include an integrated video converter and video encoder that operate using a streaming protocol to enable low stream latency of the images and other data provided to the inspection assistant. The inspection assistant can be a handheld portable device, such as a tablet.

The inspection assistant can provide interactive inspection guidance to an operator and can detect defects in components of the core of the engine. The inspection assistant can provide real time guidance and defect analysis to an operator. Particularly, the inspection assistant can guide an operator in performing the inspection and can identify defects as the operator performs the visual inspection. Identified defects can be highlighted on a display of the inspection assistant to alert the operator as to their presence, location, and/or size, for example. In this manner, operator productivity and the overall accuracy of such visual inspections can be increased or improved. The analysis results can assist an operator with making asset decisions.

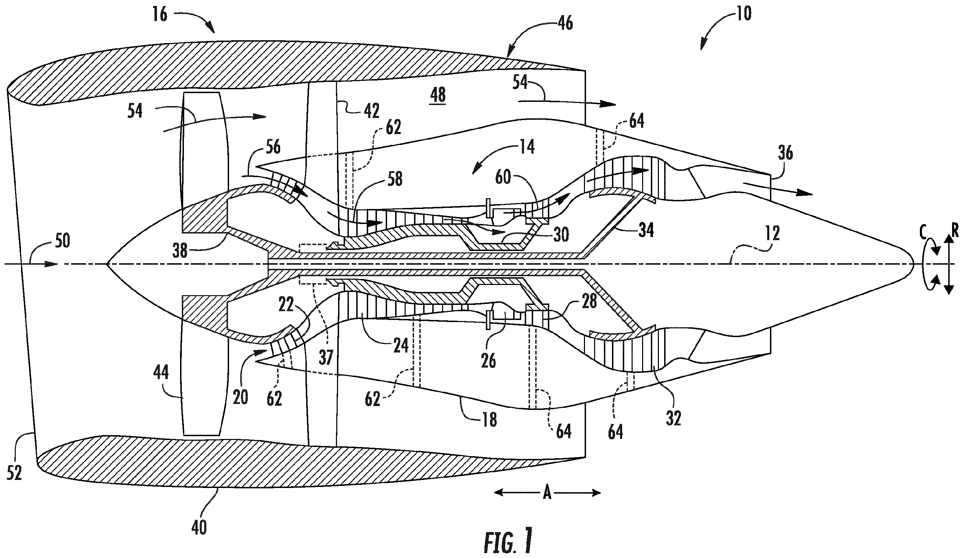

FIG. 1 provides a schematic cross-sectional view of one embodiment of a gas turbine engine 10 that may be mounted to an aircraft in accordance with aspects of the present subject matter. For reference, the engine 10 defines a longitudinal or centerline axis 12 extending therethrough. Further, the engine 10 defines an axial direction A, a radial direction R, and a circumferential direction C extending around the centerline axis 12.

The engine 10 includes a core engine 14 and a fan section 16 positioned upstream of the core engine 14. The core engine 14 includes a substantially tubular outer casing 18 that defines an annular core inlet 20. In addition, the outer casing 18 encloses and supports a low pressure or booster compressor 22 for increasing the pressure of the air that enters the core engine 14 to a first pressure level. A high pressure, multi-stage, axial-flow compressor 24 receives the pressurized air from the booster compressor 22 and further increases the pressure of the air. The pressurized air exiting the high-pressure compressor 24 flows to a combustor 26 where fuel is injected into the flow of pressurized air. The resulting mixture is combusted within the combustor 26. The high energy combustion products are directed from the combustor 26 along the hot gas path of the core engine 14 to a first (high pressure) turbine 28 for driving the high pressure compressor 24 via a first (high pressure) shaft 30, and then to a second (low pressure) turbine 32 for driving the booster compressor 22 and fan section 16 via a second (low pressure) shaft 34 that is generally coaxial with the first shaft 30. After driving each of turbines 28 and 32, the combustion products are expelled from the core engine 14 via an exhaust nozzle 36 to provide propulsive thrust.

It should be appreciated that each compressor 22, 24 may include a plurality of compressor stages, with each stage including both an annular array of stationary compressor vanes and an annular array of rotating compressor blades positioned immediately downstream of the compressor vanes. Similarly, each turbine 28, 32 may include a plurality of turbine stages, with each stage including both an annular array of stationary nozzle vanes and an annular array of rotating turbine blades positioned immediately downstream of the nozzle vanes.

Additionally, as shown in FIG. 1, the fan section 16 of the engine 10 includes a rotatable, axial-flow fan rotor assembly 38 that is surrounded by an annular fan casing 40. It should be appreciated by those of ordinary skill in the art that the fan casing 40 may be supported relative to the core engine 14 by a plurality of substantially radially extending, circumferentially spaced outlet guide vanes 42. As such, the fan casing 40 may enclose the fan rotor assembly 38 and its corresponding fan rotor blades 44. Moreover, a downstream section 46 of the fan casing 40 may extend over an outer portion of the core engine 14 to define a secondary, or bypass, airflow conduit 48 that provides additional propulsive thrust.

It should be appreciated that, in several embodiments, the second (low pressure) drive shaft 34 may be directly coupled to the fan rotor assembly 38 to provide a direct-drive configuration. Alternatively, the second drive shaft 34 may be coupled to the fan rotor assembly 38 via a speed reduction device 37 (e.g., a reduction gear or gearbox) to provide an indirect-drive or geared drive configuration. Such a speed reduction device(s) may also be provided between any other suitable shafts and/or spools within the engine 10 as desired or required.

During operation of the engine 10, an initial air flow (indicated by arrow 50) enters the engine 10 through an associated inlet 52 of the fan casing 40. The air flow 50 then passes through or across the fan blades 44 and splits into a first compressed air flow (indicated by arrow 54) that moves through bypass conduit 48 and a second compressed air flow (indicated by arrow 56) that enters the annular core inlet 20 and flows downstream to the booster compressor 22. The pressure of the second compressed air flow 56 is then increased and enters the high pressure compressor 24 (as indicated by arrow 58). After mixing with fuel and being combusted within the combustor 26, the combustion products 60 exit the combustor 26 and flow through the first turbine 28. Thereafter, the combustion products 60 flow through the second turbine 32 and exit the exhaust nozzle 36 to provide thrust for the engine 10. The first compressed airflow that moves through and exits the bypass conduit 48 also provides thrust for the engine 10.

As further shown in FIG. 1, the gas turbine engine 10 includes a plurality of access ports defined through its casings and/or frames for providing access to the interior of the core engine 14. For this embodiment, the engine 10 includes a plurality of access ports 62 (only three of which are shown) defined through the outer casing 18 for providing internal access to one or both of the compressors 22, 24. Similarly, the engine 10 includes a plurality of access ports 64 (only three of which are shown) defined through the outer casing 18 for providing internal access to one or both of the turbines 28, 32. In several embodiments, the access ports 62, 64 may be spaced apart axially along the core engine 14. For instance, the compressor access ports 62 may be spaced apart axially along each compressor 22, 24 such that at least one access port 62 is located at each compressor stage for providing access to the compressor vanes and blades located within such stage. Similarly, the turbine access ports 64 may be spaced apart axially along each turbine 28, 32 such that at least one access port 64 is located at each turbine stage for providing access to the nozzle vanes and turbine blades located within such stage. It should be appreciated that, although the access ports 62, 64 are generally described herein with reference to providing internal access to one or both of the compressors 22, 24 and/or for providing internal access to one or both of the turbines 28, 32, the gas turbine engine 10 may include access ports providing access to any suitable internal location of the engine 10, such as by including access ports that provide access within the combustor 26 and/or any other suitable component of the engine 10.

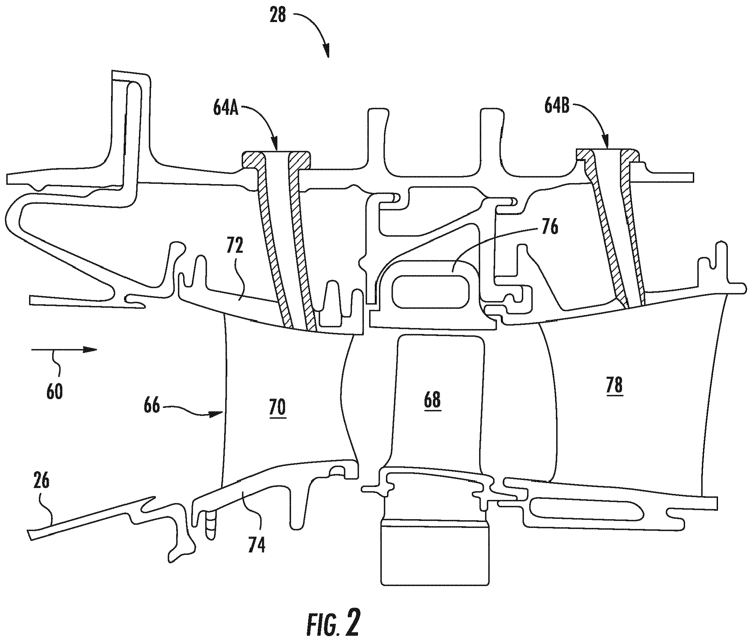

FIG. 2 provides a schematic cross-sectional view of a portion of the first (or high pressure) turbine 28 of the gas turbine engine 10 of FIG. 1. As shown, the first turbine 28 includes a first stage turbine nozzle 66 and an annular array of rotating turbine blades 68 (one of which is shown) located immediately downstream of the nozzle 66. The nozzle 66 may generally be defined by an annular flow channel that includes a plurality of radially-extending, circularly-spaced nozzle vanes 70 (one of which is shown). The vanes 70 may be supported between a number of arcuate outer bands 72 and arcuate inner bands 74. Additionally, the circumferentially spaced turbine blades 68 may generally be configured to extend radially outward from a rotor disk (not shown) that rotates about the centerline axis 12 (FIG. 1) of the engine 10. Moreover, a turbine shroud 76 may be positioned immediately adjacent to the radially outer tips of the turbine blades 68 so as to define the outer radial flowpath boundary for the combustion products 60 flowing through the turbine 28 along the hot gas path of the engine 10.

As indicated above, the turbine 28 may generally include any number of turbine stages, with each stage including an annular array of nozzle vanes and follow-up turbine blades 68. For example, as shown in FIG. 2, an annular array of nozzle vanes 78 of a second stage of the turbine 28 may be located immediately downstream of the turbine blades 68 of the first stage of the turbine 28.

Moreover, as shown in FIG. 2, a plurality of access ports 64 may be defined through the turbine casing and/or frame, with each access port 64 being configured to provide access to the interior of the turbine 28 at a different axial location. Specifically, as indicated above, the access ports 64 may, in several embodiments, be spaced apart axially such that each access port 64 is aligned with or otherwise provides interior access to a different stage of the turbine 28. For instance, as shown in FIG. 2, a first access port 64A may be defined through the turbine casing/frame to provide access to the first stage of the turbine 28 while a second access port 64B may be defined through the turbine casing/frame to provide access to the second stage of the turbine 28. It should be appreciated that similar access ports 64 may also be provided for any other stages of the turbine 28 and/or for any turbine stages of the second (or low pressure) turbine 32. It should also be appreciated that, in addition to the axially spaced access ports 64 shown in FIG. 2, access ports may be also provided at differing circumferentially spaced locations. For instance, in one embodiment, a plurality of circumferentially spaced access ports may be defined through the turbine casing/frame at each turbine stage to provide interior access to the turbine 28 at multiple circumferential locations around the turbine stage.

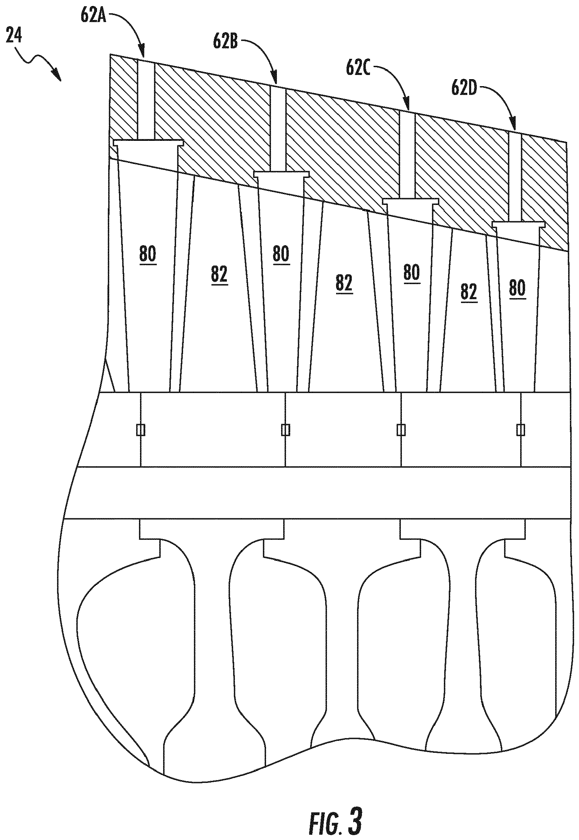

FIG. 3 provides a schematic cross-sectional view of a portion of the high pressure compressor 24 of the gas turbine engine 10 of FIG. 1. As shown, the compressor 24 may include a plurality of compressor stages, with each stage including both an annular array of fixed compressor vanes 80 (only one of which is shown for each stage) and an annular array of rotatable compressor blades 82 (only one of which is shown for each stage). Each row of compressor vanes 80 is generally configured to direct air flowing through the compressor 24 to the row of compressor blades 82 immediately downstream thereof.

As indicated above, the compressor 24 may include a plurality of access ports 62 defined through the compressor casing/frame, with each access port 62 being configured to provide access to the interior of the compressor 24 at a different axial location. Specifically, in several embodiments, the access ports 62 may be spaced apart axially such that each access port 62 is aligned with or otherwise provides interior access to a different stage of the compressor 24. For instance, as shown in FIG. 3, first, second, third and fourth access ports 62A, 62B, 62C, 62D are illustrated that provide access to four successive stages, respectively, of the compressor 24.

It should be appreciated that similar access ports may also be provided for any of the other stages of the compressor 24 and/or for any of the stages of the low pressure compressor 22. It should also be appreciated that, in addition to the axially spaced access ports 62 shown in FIG. 3, access ports may be also provided at differing circumferentially spaced locations. For instance, in one embodiment, a plurality of circumferentially spaced access ports may be defined through the compressor casing/frame at each compressor stage to provide interior access to the compressor 24 at multiple circumferential locations around the compressor stage.

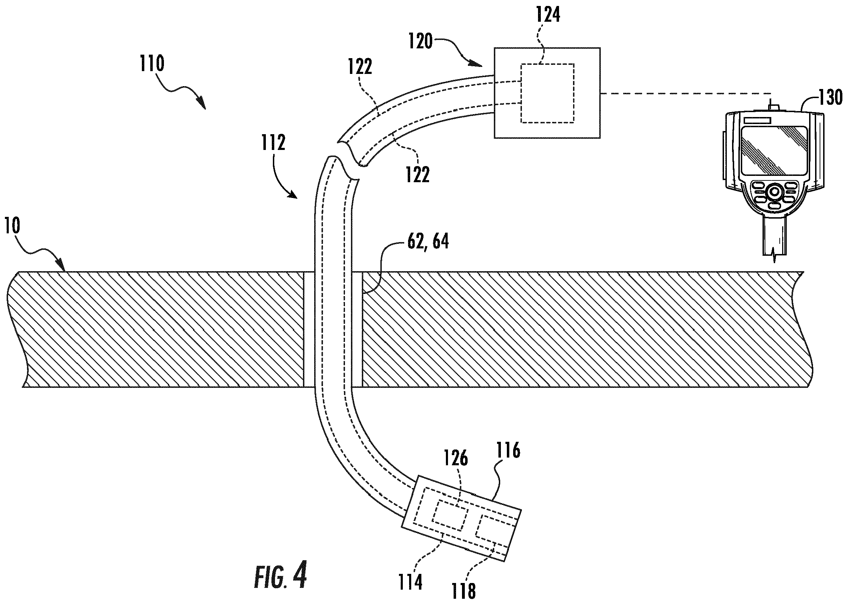

FIG. 4 provides a schematic view of an optical system 110 according to one example embodiment of the present subject matter. The optical system 110 can be used to perform a visual inspection of a gas turbine engine, such as the gas turbine engine 10 of FIG. 1. The optical system 110 includes an optical probe 112 and a scope monitor 130 communicatively coupled with the optical probe 112. As shown, the optical probe 112 has been inserted through an access port of the engine 10, such as one of the turbine access ports 64 described above with reference to FIG. 2 or one of the compressor access ports 62 described above with reference to FIG. 3.

In general, the optical probe 112 may correspond to any suitable optical device that may be inserted through an access port 62, 64 of the gas turbine engine 10 to allow images (e.g., still images and/or video) of the interior of the engine 10 to be captured or otherwise obtained. For instance, in some embodiments, the optical probe 112 may correspond to a borescope, videoscope, fiberscope or any other similar optical device known in the art that allows for the interior of a gas turbine engine 10 to be viewed through an access port 62, 64. In such embodiments, the optical probe 112 may include one or more optical elements 114, such as one or more optical lenses, optical fibers, image capture devices, cables, and/or the like, for obtaining views or images of the interior of the engine 10 at a probe tip 116 of the probe 112 and for transmitting or relaying such images from the probe tip 116 along the length of the probe 112 to the exterior of the engine 10. For instance, as shown in FIG. 4, the interior views or images obtained by the probe 112 may be transmitted from the probe tip 116 to the scope monitor 130 connected or otherwise coupled to the probe 112. In this way, the images captured by the optical probe 112 can be displayed the scope monitor 130.

In some embodiments, a light source 118, such as an LED, may be provided at or adjacent to the probe tip 116 to provide lighting within the interior of the engine 10. The optical probe 112 may also include an articulation assembly 120 that allows the orientation of the probe tip 116 to be adjusted within the interior of the gas turbine engine 10. For example, the articulation assembly 120 may allow for the probe tip 116 to be rotated or pivoted about a single axis or multiples axes to adjust the orientation of the probe tip 116 relative to the remainder of the probe 112. It should be appreciated that the articulation assembly 120 may generally have any suitable configuration and/or may include any suitable components that allow for adjustment of the orientation of the probe tip 116 relative to the remainder of the probe 112. For example, in some embodiments, a plurality of articulation cables 122 may be coupled between the probe tip 116 and one or more articulation motors 124. In such an embodiment, by adjusting the tension of the cables 122 via the motor(s) 124, the probe tip 116 may be reoriented within the gas turbine engine 10. In some embodiments, the articulation assembly 120 may be electronically controlled.

Further, in some embodiments, the optical probe 112 can also include a location signal receiver 126 positioned at or adjacent to its probe tip 116. In such embodiments, the location signal receiver 126 can receive location-related signals from a plurality of location transmitters mounted on or within the engine 10 that provide an indication of the position of the location signal receiver 126 (and, thus, the probe tip 116) relative to the location transmitters. For instance, the location signal receiver 126 can receive signals from the location transmitters that provide an indication of the distance defined between the receiver 126 and each transmitter (e.g., based on the signal strength, the time of flight of the signals, and/or time of arrival of the signals) and/or that provide an indication of the angle defined between the receiver 126 and each transmitter (e.g., based on the angle of incidence or angle of arrival of the signals). The signals received by the location signal receiver 126 may then be transmitted to the scope monitor 130. The scope monitor 130 can include one or more processors and one or more memory devices. The one or more processors of the scope monitor 130 can be used to determine the current location of the probe tip 116 within the gas turbine engine 10 using any suitable signal-based positioning technique, such as a trilateration technique or a triangulation technique. Additionally or alternatively, the signals received by the location signal receiver 126 can be transmitted to the scope monitor 130 and stored on the one or more memory devices. The signals or data containing such signals can be transmitted otherwise provided to a computing device for processing the current location of the probe tip 116. For instance, data containing such signals can be routed to an inspection assistant that can process the signals, and among other things, provide instructions to an operator based on current location of the probe tip 116.

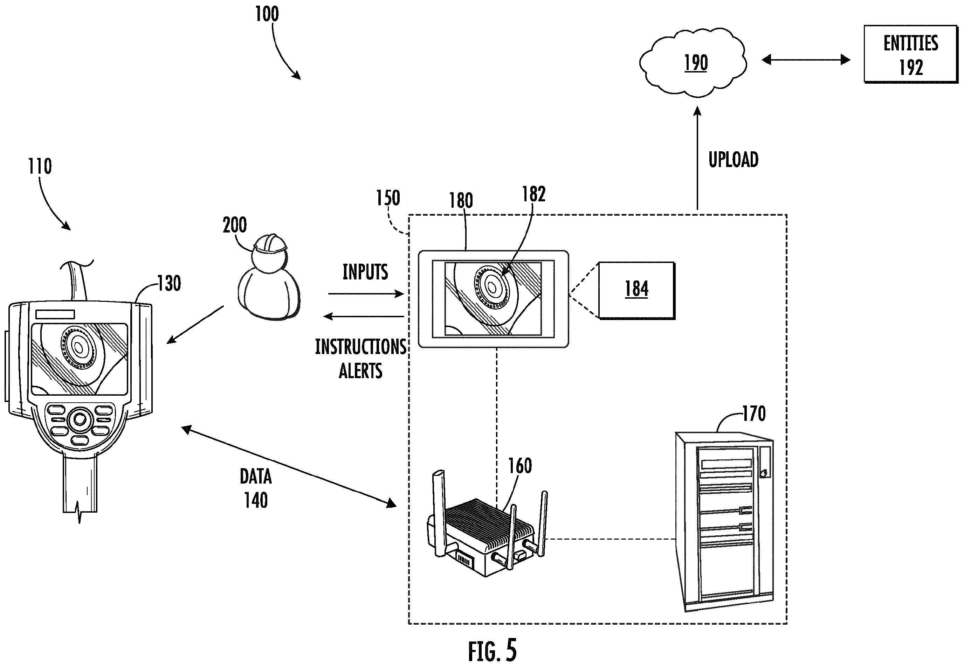

FIG. 5 provides a schematic view of an example visual inspection system 100 according to one embodiment of the present subject matter. As shown, the visual inspection system 100 includes the optical system 110 of FIG. 4. In addition, in accordance with the inventive aspects of the present disclosure, the visual inspection system 100 includes an Artificial Intelligence (AI) adaptor, or AI adaptor 150. Generally, the AI adaptor 150 is operatively configured to provide real-time inspection assistance to an operator 200 performing an inspection of a gas turbine engine.

For this embodiment, the AI adaptor 150 includes a gateway 160. The gateway 160 acts as the gateway node between the optical system 110 and the AI adaptor 150. As depicted, the gateway 160 is communicatively coupled with the optical system 110. More particularly, the gateway 160 is communicatively coupled with the scope monitor 130 of the optical system 110. For instance, the scope monitor 130 can include a video output port and a wired cable or link can communicatively couple the scope monitor 130 with the gateway 160. Additionally or alternatively, the optical system 110 and the gateway 160 can be communicatively coupled via a wireless connection, e.g., over a wireless network.

As shown in FIG. 5, the gateway 160 of the AI adaptor 150 can receive data 140 from the optical system 110. The data 140 can include inspection data. The inspection data can include images (e.g., still images and/or video) captured by the optical probe 112 (FIG. 4). The captured images can be images of components of the core engine 14 (FIG. 1), for example. The data 140 can also include operation data. The operation data can include, without limitation, the access port in which the optical probe 112 (FIG. 4) is installed, the components of the engine 10 (FIG. 4) being inspected, the stage being examined, the resolution of the optical elements 114 (FIG. 4) of the optical probe 112 (FIG. 4), engine operation history (e.g., number of cycles run), the location of the probe tip 116 (FIG. 4) of the optical probe 112 (FIG. 4), as well as other information, for example. The gateway 160 can translate the incoming data 140 from its original protocol to a preselected protocol. The gateway 160 can receive updated or refreshed data, e.g., at a predetermined interval, throughout the inspection process.

The AI adaptor 150 also includes a server 170. The server 170 is communicatively coupled with the gateway 160, e.g., via a suitable wired and/or wireless connection. The server 170 can include one or more processors and one or more memory devices, for example. In some embodiments, the server 170 functions as a data lake. The server 170 can receive data from the gateway 160. The data received by the server 170 can include images (e.g., still images and/or video) captured by the optical probe 112 (FIG. 4) of the optical system 110. The stored images can be uploaded to a cloud 190 or other network where the captured images can be shared with one or more entities 192, such as engine customers, engine service personnel, and/or engine manufacturers, among others.

As further shown in FIG. 5, the AI adaptor 150 includes an inspection assistant 180. The inspection assistant 180 is communicatively coupled with the optical system 110, e.g., via the gateway 160 by one or more wired and/or wireless connections. In this way, the inspection assistant 180 can receive data from the optical system 110 as will be explained in more detail below. The inspection assistant 180 is also communicatively coupled with the server 170. In this way, data can be exchanged between the server 170 and the inspection assistant 180.

Generally, the inspection assistant 180 is a smart digital assistant to an operator during an inspection of a gas turbine engine. In some embodiments, the inspection assistant 180 is a handheld portable device, such as an iPad, laptop, etc. Advantageously, the portable and handheld aspect of the inspection assistant 180 can facilitate effective and efficient inspection assistance to an operator. For instance, the portable and handheld aspect of the inspection assistant 180 can allow an operator to hold the inspection assistant 180 and move around during the inspection process as desired. In other embodiments, the inspection assistant 180 is neither portable nor handholdable.

The inspection assistant 180 has one or more processors, and one or more memory devices. The one or more memory devices can store information accessible by the one or more processors, including computer-readable instructions that can be executed by the one or more processors. The instructions can be any set of instructions that, when executed by the one or more processors, cause the one or more processors to perform operations, such as any of the operations described herein. For instance, as one example, the instructions can include computer vision system instructions that, when executed, cause the one or more processors to detect defects on one or more components of the engine being inspected. As another example, the instructions can include inspection guide instructions that, when executed, cause the one or more processors to generate an alert or set of instructions or steps for an operator to follow based on various inputs, such as a location of the probe tip 116 (FIG. 4) and/or a detected defect, among other possible inputs.

The inspection assistant 180 also includes a human-machine interface 182. The human-machine interface 182 can include one or more displays, speakers, microphones, user controls (e.g., buttons, dials, levers, touchscreen, etc.), among other possible other machine-human interactive components. The one or more processors can cause particular images to be displayed on a display of the human-machine interface 182 and can cause one or more audible instructions to be generated by the one or more speakers, for example. In addition, the one or more processors can perform operations based on inputs received from the user controls and/or the one or more microphones of the human-machine interface 182.

With reference to FIGS. 4 and 5, an example manner in which the AI adaptor 150 can provide real time assistance to an operator 200 performing a visual inspection of an engine will now be provided. To commence a visual inspection of an engine, such as the gas turbine engine 10, the optical probe 112 of the optical system 110 is installed or inserted through an access port of the gas turbine engine 10. The access port can be any suitable access port, such as an access port 62 associated with a compressor of the gas turbine engine 10, an access port 64 associated with a turbine of the gas turbine engine 10, or some other access port providing interior access to another section of the gas turbine engine 10. As noted above, the optical probe 112 is configured to capture images of an interior of the gas turbine engine at a location associated with the access port.

The images captured by the optical probe 112, which can be still images or video, are transmitted to the scope monitor 130 of the optical system 110. The images can be presented on the monitor or display of the scope monitor 130. An operator can view the interior of the engine 10 by viewing the images displayed on the scope monitor 130. As will be appreciated, however, conventional scope monitors have not provided interactive real time inspection assistance and/or analysis to an operator. Thus, in accordance with the inventive aspects of the present disclosure, the AI adaptor 150 is communicatively coupled with the optical system 110 to ultimately provide real-time inspection assistance to an operator performing an inspection of the gas turbine engine 10.

Particularly, data 140 captured, gathered, or associated with the optical system 110 is provided to the AI adaptor 150. More specifically, the data 140 is transmitted to the gateway 160 of the AI adaptor 150. The data 140 can include inspection data and operation data as noted above. The gateway 160 translates the protocol of the data 140 into a preselected protocol as needed and then routes the data 140 to both the server 170 and the inspection assistant 180. The data 140 can be stored on one or more memory devices of the server 170, and as noted above, the data 140 stored on the server 170 can be provided to downstream entities, such as engine customers, engine service personnel, and/or engine manufacturers, among others.

The gateway 160 is configured to route the images captured by the optical probe 112 to the inspection assistant 180. Accordingly, the one or more processors of the inspection assistant 180 are configured to receive at least a portion of the data 140, and more particularly, images captured by the optical probe 112. The images captured by the optical probe 112 can provide internal views of the gas turbine engine 10. Upon receiving the images, the one or more processors of the inspection assistant 180 are further configured to cause the images to be displayed on the human-machine interface 182, e.g., on a display thereof. In this manner, the images captured by the optical probe 112 are simultaneously displayed on the display or monitor of the scope monitor 130 and the human-machine interface 182 of the inspection assistant 180. In some embodiments, only the human-machine interface 182 displays the images.

Notably, the inspection assistant 180 can host or include an inspection analyzer module 184. The inspection analyzer module 184 is a set of instructions executable by the one or more processors of the inspection assistant 180. The inspection analyzer module 184 uploaded to and hosted by the inspection assistant 180 can be specific to the engine or engine model being inspected. As noted above, in some embodiments, the inspection assistant 180 can be a handheld portable device. Accordingly, in such embodiments, the inspection assistant 180 may have relatively limited memory storage available. Loading an analyzer module specific to an engine or engine model can provide an efficient manner of using the relatively limited memory storage of the inspection assistant 180.

In some embodiments, when the inspection analyzer module 184 is executed, the one or more processors of the inspection assistant 180 can detect one or more defects associated with one or more components of the gas turbine engine 10. In this way, the inspection assistant 180 can execute one or more computer vision techniques. Any suitable computer vision system technique or techniques can be implemented, such as e.g., one or more deep learning object recognition techniques. For instance, one or more Convolutional Neural Networks (CNNs) can be utilized to detect defects in components of the engine 10. The CNNs can determine the physical bounds of a given detected defect and can also be used to classify a given defect. In some embodiments, the inspection analyzer module 184 can include CNNs for each associated section of the engine 10, e.g., a CNN for the compressor section, a CNN for the combustor section, a CNN for the turbine section, etc. Further, in some embodiments, the inspection analyzer module 184 can include CNNs for multiple components within a section of the engine 10. For instance, for the compressor section, the inspection analyzer module 184 can include a CNN for detecting defects on the stator vanes, a CNN for detecting defects on the compressor blades, etc.

Example defects that can be detected or identified by the inspection assistant 180 upon execution of the inspection analyzer module 184 can include, without limitation, cracks, welding failures, delamination of a composite component, among others. The detection techniques embodied in the inspection analyzer module 184 hosted on the inspection assistant 180 can be specific to the engine or the engine model being inspected. Furthermore, the detection techniques embodied in the inspection analyzer module 184 hosted on the inspection assistant 180 can be specific to various components, stations, or sections of the engine. For instance, the inspection analyzer module 184 can include instructions for detecting defects associated with components of a compressor of the gas turbine engine 10, instructions for detecting defects associated with components of a turbine of the gas turbine engine 10, instructions for detecting defects associated with components of a combustion section of the gas turbine engine 10, etc.

Further, in some embodiments, once a defect has been detected by the inspection assistant 180, the one or more processors of the inspection assistant 180 are further configured to generate an alert indicating that a defect associated with a component of the gas turbine engine is detected. As one example, in generating the alert indicating that a defect associated with a component of the gas turbine engine is detected, the one or more processors of the inspection assistant 180 can cause the inspection assistant 180 to audibly alert an operator that a defect associated with a component of the gas turbine engine is detected. For instance, the one or more processors of the inspection assistant 180 can cause one or more speakers of the human-machine interface 182 to generate an alarm, audible text (e.g., defect detected), or some other human-audible noise to alert an operator that a defect has been detected.

In some embodiments, operation data received as part of the data 140 can be used to generate contextual audible alerts. For instance, the operation data received as part of the data 140 can include data indicating a location of the probe tip 116 and/or the access port in which the optical probe 112 is installed. The location of the probe tip 116 and/or the access port in which the optical probe 112 is installed can be used to determine the component and/or stage of the component having the detected defect. Accordingly, using this information, the generated audible alert can include context associated with the component having the defect. For instance, the audible generated alert can be "defect detected; high pressure turbine stage one nozzle." Additionally or alternatively, in other embodiments, upon execution of the inspection analyzer module 184, the one or more processors can use object recognition techniques to identify the component or components presented or displayed on the human-machine interface 182 of the inspection assistant 180. Upon a determination of the objects presented on the human-machine interface 182, the one or more processors can generate an audible alert indicating the component having the defect.

In yet other embodiments, to provide further context to the audible alert indicating the detected defect, the one or more processors can, upon execution of the inspection analyzer module 184, classify the detected defect into a defect class. The defect class can be one of a plurality of possible defect classes. Accordingly, in some embodiments, the inspection analyzer module 184 can include instructions for defect classification. Defects can be classified by size, location, type, severity, etc. With the defect classified, the one or more processors can generate an audible alert indicating the component having the defect and the type of class of the defect. For instance, an example generated alert can be "delamination defect detected at a leading edge of a stage one high pressure turbine blade."

As another example, in addition to or alternatively to generating audible alerts indicating that a defect associated with a component of the gas turbine engine is detected, the one or more processors of the inspection assistant 180 can cause the inspection assistant 180 to augment the images displayed on the human-machine interface 182. The images displayed on the human-machine interface 182 can be augmented with a defect graphic, for example. For instance, the images can be augmented by overlaying a defect graphic over the defect detected. The defect graphic can be an outline of the bounds of the defect, for example. In some embodiments, the defect graphic overlaying the defect detected in the images displayed on the human-machine interface 182 is represented in a color different from the component having the defect detected. In other embodiments, the defect graphic is presented on the display but not overlaying the detected defect. For instance, the defect graphic can be a text block presented in any suitable location on the display.

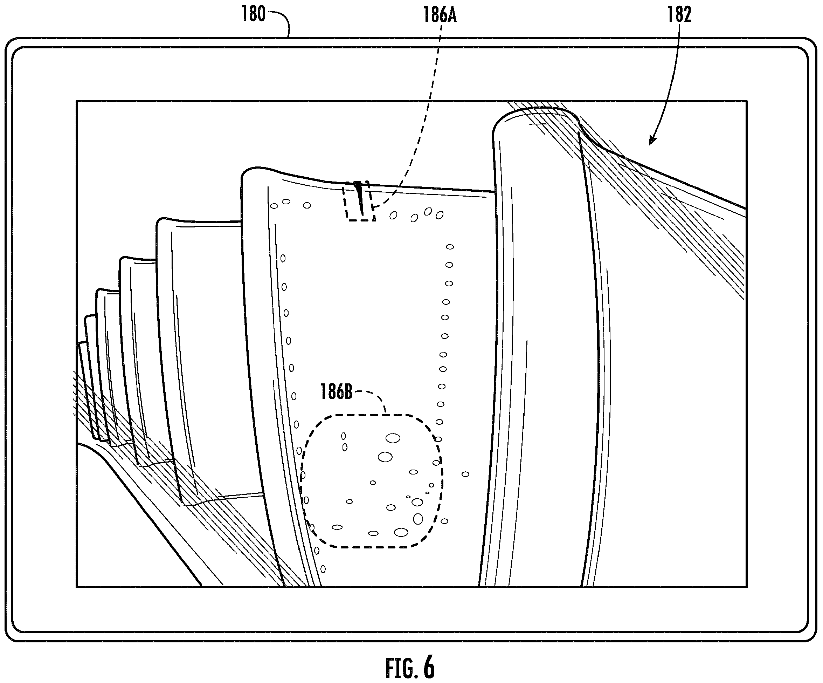

By way of example, FIG. 6 provides a schematic view of the inspection assistant displaying real time images of an interior of the gas turbine engine 10. The images are displayed on a display of the human-machine interface 182. For this embodiment, the images rendered on the display of the human-machine interface 182 is a row of high pressure turbine blades. As shown, as the images, which in this example is a video stream, are rendered on the human-machine interface 182, the one or more processors of the inspection assistant 180 augment the images displayed on the human-machine interface 182 by overlaying defect graphics over the detected defects. Particularly, as shown in FIG. 6, one of the turbine blades has a detected defect at its blade tip, and accordingly, a defect graphic 186A is overlaid over the defect. In addition, the same turbine blade has detected defect region adjacent its root, and thus, a defect graphic 186B is overlaid over the defect region. The overlaid defect graphics 186A, 186B can assist an operator with identifying defects associated with the blade, and more generally, various components of the engine.

In some embodiments, with reference again to FIGS. 4 and 5, the one or more processors of the inspection assistant 180 are configured to classify the defect detected into a defect class. The defect class can be one of a plurality of possible defect classes. Accordingly, in some embodiments, the inspection analyzer module 184 can include instructions for defect classification. As noted above, defects can be classified by size, location, type, severity, etc. With the defect classified, the one or more processors can, in generating the alert, cause the inspection assistant 180 to augment the images displayed on the human-machine interface 182 such that the defect graphic overlaying the defect detected in the images displayed on the human-machine interface 182 is represented in a color associated with the defect class in which the defect detected has been classified.

For instance, with reference again to FIG. 6, the defect graphic 186A overlaying the detected defect at the blade tip can be classified in a first defect class. Accordingly, the defect graphic 186A can be rendered in a first color, e.g., blue. In addition, the defect graphic 186B overlaying the detected defect toward the root of the blade can be classified in a second defect class. Accordingly, the defect graphic 186B can be rendered in a second color, e.g., orange. The color-coded defect graphics 186A, 186B can assist an operator with identification and classification of defects associated with the turbine blade, and more generally, various components of the engine.

Notably, the one or more processors of the inspection assistant 180 can, in real time, 1) receive data 140 that includes images of the interior of the gas turbine engine 10 captured by the optical probe 112; 2) cause the images to be displayed on the human-machine interface 182 of the inspection assistant 180; and 3) detect or scan for defects associated with one or more components of the gas turbine engine. The one or more processors can iterate this process as new, refreshed, or otherwise updated data 140 is provided to the inspection assistant 180. Further, upon detection of one or more defects, the one or more processors of the inspection assistant 180 can, in real time, generate an alert indicating that a defect associated with a component of the gas turbine engine is detected. In this manner, the AI adaptor 150, or more particularly the inspection assistant 180, can analyze inspection and operation data 140 and can provide real-time analysis results (e.g., online defect diagnosis) based on the data 140 to an operator. This may, among other things, increase the reliability of defect detection and reduce the tedious work of result management; thus, inspection productivity can be increased, and better asset decisions can be made.

In addition to providing online real time defect analysis, in some embodiments, the inspection assistant 180 can also provide real time interactive assistance or instructions to an operator. In this manner, an operator can be guided through an on-wing visual inspection process.

As one example, the one or more processors of the inspection assistant 180 can provide instructions to an operator based at least in part on a selected work scope of an inspection to be performed on a gas turbine engine. For instance, a work scope of an inspection to be performed on a gas turbine engine can be selected, e.g., by an operator. The selected work scope of the inspection can have an associated set of interactive instructions. The set of interactive instructions can provide step-by-step instructions or a task list for how the inspection associated with the selected work scope is to be performed. In this way, an operator can perform an inspection on an engine with no or minimal experience with a particular engine whilst still being able to successfully perform the inspection. The interactive instructions can be presented or provided to an operator audibly, visually, in a haptic manner (e.g., by vibration of the inspection assistant 180 when an instruction is not followed), as well as other suitable manners. The human-machine interface 182 of the inspection assistant 180 can provide or present the interactive instructions to the operator 200.

In some embodiments, the one or more processors of the inspection assistant 180 can provide instructions to an operator based at least in part on the defect or defects detected. For example, upon detection of a defect of a component of the gas turbine engine 10, the one or more processors of the inspection assistant 180 can provide instructions to an operator to manipulate at least one of the optical probe 112, the engine 10, e.g., by rotating a stage of rotor blades, or some other inspection device. For instance, the provided instructions can indicate that the operator 200 is to change the speed, direction, adjust the lighting, etc. of the optical probe 112 so that the defected defect can be inspected or reexamined once again. In this way, the detection of the defect can be confirmed or validated. Alternatively, a component or components of the engine 10 can be manipulated so that the optical probe 112 can provide images of the detected defect once again, e.g., so that the inspection assistant 180 can perform a second identification and/or classification analysis on the detected defect.

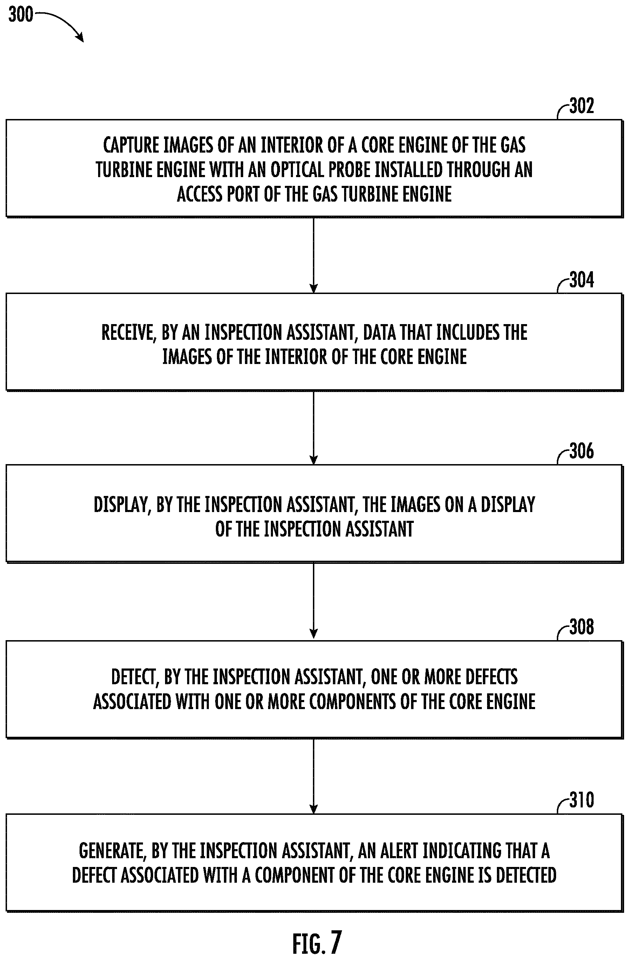

FIG. 7 provides a flow diagram for an example method (300) of visually inspecting a gas turbine engine according to one example embodiment of the present subject matter. For instance, as will be explained below, the various systems and components of the visual inspection system 100 of FIG. 5 can be used to implement method (300).

At (302), the method (300) includes capturing images of an interior of a core engine of the gas turbine engine with an optical probe installed through an access port of the gas turbine engine. For instance, with reference to FIGS. 4 and 5, to commence a visual inspection of an engine, such as the gas turbine engine 10, the optical probe 112 of the optical system 110 is installed or inserted through an access port of the gas turbine engine 10. The optical probe 112 can capture images of an interior of the gas turbine engine at a location associated with the access port. The images captured by the optical probe 112, which can be still images or video, are transmitted to the scope monitor 130 of the optical system 110. The images can be presented on the monitor or display of the scope monitor 130 and an operator can view the interior of the engine 10 by viewing the images displayed on the scope monitor 130.

At (304), the method (300) includes receiving, by an inspection assistant, data that includes the images of the interior of the core engine. For instance, with reference again to FIGS. 4 and 5, data 140 captured, gathered, or associated with the optical system 110 is provided to the AI adaptor 150 of which the inspection assistant 180 is a component. More specifically, the data 140 is transmitted to the gateway 160 of the AI adaptor 150. The data 140 can include inspection data and operation data. The gateway 160 translates the protocol of the data 140 into a preselected protocol as needed and then routes the data 140 to both the server 170 and the inspection assistant 180. One or more processors of the inspection assistant 180 are configured to receive at least a portion of the data 140, and more particularly, the images captured by the optical probe 112.

At (306), the method (300) includes displaying, by the inspection assistant, the images on a display of the inspection assistant. For instance, with reference again to FIGS. 4 and 5, upon receiving the images at (304), the one or more processors of the inspection assistant 180 are further configured to cause the images to be displayed on a display of the human-machine interface 182. In this manner, in some implementations, the images captured by the optical probe 112 are simultaneously displayed on the display or monitor of the scope monitor 130 and the display of the human-machine interface 182 of the inspection assistant 180.

At (308), the method (300) includes detecting, by the inspection assistant, one or more defects associated with one or more components of the core engine. For instance, with reference again to FIGS. 4 and 5, the inspection assistant 180 can host or include an inspection analyzer module 184. The inspection analyzer module 184 is a set of instructions executable by the one or more processors of the inspection assistant 180. In some implementations, when the inspection analyzer module 184 is executed, the one or more processors of the inspection assistant 180 can detect one or more defects associated with one or more components of the core engine. In this way, the inspection assistant 180 can execute one or more computer vision techniques. Any suitable computer vision system technique or techniques can be implemented, such as e.g., one or more deep learning object recognition techniques. For instance, one or more Convolutional Neural Networks (CNNs) can be utilized to detect defects in components of the engine 10. Example defects that can be detected or identified by the inspection assistant 180 upon execution of the inspection analyzer module 184 can include, without limitation, cracks, welding failures, delamination of a composite component, among others.

At (310), the method (300) includes generating, by the inspection assistant, an alert indicating that a defect associated with a component of the core engine is detected. For instance, in some implementations, generating the alert indicating that a defect associated with a component of the gas turbine engine is detected includes causing the inspection assistant to generate an audible alert indicating that a defect associated with a component of the gas turbine engine is detected. In other implementations, generating the alert indicating that a defect associated with a component of the gas turbine engine is detected includes augmenting the images displayed on the display of the inspection assistant with a defect graphic. As one example, the defect graphic can be overlaid over the detected defect, e.g., as shown in FIG. 6. In some implementations, the defect graphic overlaying the defect detected in the images displayed on the display of the human-machine interface 182 is represented in a color different from the component having the defect detected. In some further implementations, the one or more processors of the inspection assistant are configured to classify the defect detected into a defect class of among a plurality of defect classes, and in such implementations, the defect graphic overlaying the defect detected in the images displayed on the human-machine interface is represented in a color associated with the defect class in which the defect detected has been classified. As another example, the defect graphic need not be overlaid over the detected defect but rather may be presented in any suitable location on the display of the human-machine interface 182 of the inspection assistant 180.

Notably, in performing method (300), the capturing at (310), the receiving at (304), the displaying at (306), the detecting at (308), and the generating at (310) occur in real time. In this way, real-time inspection assistance can be provided to an operator performing an inspection of the core engine of the gas turbine engine 10.

In some further implementations, the method (300) further includes providing, by the inspection assistant, instructions to an operator based at least in part on a selected work scope of an inspection on the gas turbine engine. For instance, a work scope of an inspection to be performed on a gas turbine engine can be selected, e.g., by an operator. The selected work scope of the inspection can have an associated set of interactive instructions. The set of interactive instructions can provide step-by-step instructions or a task list for how the inspection associated with the selected work scope is to be performed. The interactive instructions can be presented or provided to an operator audibly, visually, in a haptic manner (e.g., by vibration of the inspection assistant 180 when an instruction is not followed), as well as other suitable manners. The human-machine interface 182 of the inspection assistant 180 can provide or present the interactive instructions to the operator.

In other implementations, the method (300) further includes providing, by the inspection assistant, instructions to an operator based at least in part on the defect detected. For example, upon detection of a defect of a component of the gas turbine engine 10 at (308), the one or more processors of the inspection assistant 180 can provide instructions to an operator to manipulate at least one of the optical probe 112, the engine 10, e.g., by rotating a stage of rotor blades, or some other inspection device. For instance, the provided instructions can indicate that the operator is to change the speed, direction, adjust the lighting, etc. of the optical probe 112 so that the defected defect can be inspected or reexamined once again. In this way, the detection of the defect can be confirmed or validated. Alternatively, a component or components of the engine 10 can be manipulated so that the optical probe 112 can provide images of the detected defect once again, e.g., so that the inspection assistant 180 can perform a second identification and/or classification analysis on the detected defect.

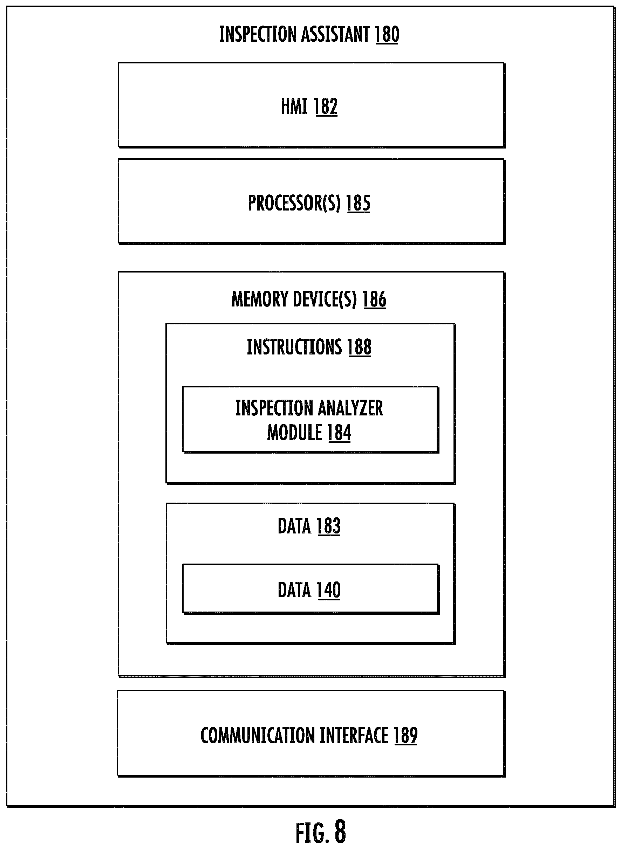

FIG. 8 provides a block diagram of the inspection assistant 180 that can be used to implement the operations described herein according to example embodiments of the present subject. As shown in FIG. 8, the inspection assistant 180 includes the human-machine interface 182, which can include a display and user controls as noted previously. The inspection assistant 180 also includes one or more processor(s) 185 and one or more memory device(s) 186. The one or more processor(s) 185 can include any suitable processing device, such as a microprocessor, microcontroller, integrated circuit, logic device, or other suitable processing device. The one or more memory device(s) 186 can include one or more computer-readable medium, including, but not limited to, non-transitory computer-readable medium or media, RAM, ROM, hard drives, flash drives, and other memory devices, such as one or more buffer devices.

The one or more memory device(s) 186 can store information accessible by the one or more processor(s) 185, including computer-readable instructions 188 that can be executed by the one or more processor(s) 185. The instructions 188 can be any set of instructions that, when executed by the one or more processor(s) 185, cause the one or more processor(s) 185 to perform operations. The instructions 188 can be software written in any suitable programming language or can be implemented in hardware. The instructions 188 can be any of the computer-readable instructions noted herein. For instance, the instructions 188 can include the inspection analyzer module 184. The memory device(s) 186 can further store data 183 that can be accessed by the processor(s) 185. For example, the data 183 can include received data 140. Further, the data 183 can include one or more table(s), function(s), algorithm(s), model(s), equation(s), etc. according to example embodiments of the present disclosure.

The inspection assistant 180 can also include a communication interface 189 used to communicate, for example, with other components of the visual inspection system 100 or other systems or devices. The communication interface 189 can include any suitable components for interfacing with one or more network(s), including for example, transmitters, receivers, ports, controllers, antennas, or other suitable components.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

Further aspects of the invention are provided by the subject matter of the following clauses:
1. A system, comprising: an optical system having an optical probe and a monitor communicatively coupled with the optical probe, the optical probe being insertable through an access port of a gas turbine engine and configured to capture images of an interior of the gas turbine engine at a location associated with the access port; an inspection assistant communicatively coupled with the optical system, the inspection assistant having a human-machine interface, one or more processors, and one or more memory devices, the one or more processors of the inspection assistant being configured to: (a) receive data including images captured by the optical probe, the images captured by the optical probe providing internal views of the gas turbine engine; (b) cause the images to be displayed on the human-machine interface; (c) detect one or more defects associated with one or more components of the gas turbine engine; and (d) generate an alert indicating that a defect associated with a component of the gas turbine engine is detected, and wherein the one or more processors of the inspection assistant (a) receive, (b) cause, (c) detect, and (d) generate the alert in real time.
2. The system of any preceding clause, wherein the inspection assistant is a handheld portable device.
3. The system of any preceding clause, wherein the optical system has a display communicatively coupled with the optical probe, and wherein the images captured by the optical probe are simultaneously displayed on the display and the human-machine interface of the inspection assistant.
4. The system of any preceding clause, wherein the one or more processors of the inspection assistant detect the one or more defects associated with one or more components of the gas turbine engine by executing an inspection analyzer module hosted on the inspection assistant.
5. The system of any preceding clause, further comprising: a gateway communicatively coupled with the optical system and the inspection assistant, the gateway being configured to route the images captured by the optical probe to the inspection assistant.
6. The system of any preceding clause, wherein the one or more processors of the inspection assistant are further configured to: provide instructions to an operator based at least in part on a selected work scope of an inspection on the gas turbine engine.
7. The system of any preceding clause, wherein the one or more processors of the inspection assistant are further configured to: provide instructions to an operator based at least in part on the defect detected.
8. The system of any preceding clause, wherein in generating the alert indicating that a defect associated with a component of the gas turbine engine is detected, the one or more processors of the inspection assistant are configured to: cause the inspection assistant to generate an audible alert that indicates a defect associated with a component of the gas turbine engine is detected.
9. The system of any preceding clause, wherein in generating the alert indicating that a defect associated with a component of the gas turbine engine is detected, the one or more processors of the inspection assistant are configured to: augment the images displayed on the human-machine interface by overlaying a defect graphic over the defect detected.
10. The system of any preceding clause, wherein the defect graphic overlaying the defect detected in the images displayed on the human-machine interface is represented in a color different from the component having the defect detected.
11. The system of any preceding clause, wherein the one or more processors of the inspection assistant are configured to: classify the defect detected into a defect class of among a plurality of defect classes; and wherein the defect graphic overlaying the defect detected in the images displayed on the human-machine interface is represented in a color associated with the defect class in which the defect detected has been classified.
12. An inspection assistant for aiding an operator during a visual inspection of a gas turbine engine, the inspection assistant comprising: a human-machine interface having a display; one or more memory devices; one or more processors, the one or more processors of the inspection assistant being configured to: (a) receive data including images captured of an interior of a core engine of the gas turbine engine; (b) cause the images to be displayed on the display of the human-machine interface; (c) detect one or more defects associated with one or more components of the core engine; and (d) generate an alert indicating that a defect associated with a component of the gas turbine engine is detected, and wherein the one or more processors of the inspection assistant (a) receive, (b) cause, (c) detect, and (d) generate in real time.
13. The inspection assistant of any preceding clause, wherein the inspection assistant is a handheld portable device.
14. The inspection assistant of any preceding clause, wherein in generating the alert indicating that a defect associated with a component of the gas turbine engine is detected, the one or more processors of the inspection assistant are configured to: cause the inspection assistant to generate an audible alert that indicates a defect associated with a component of the gas turbine engine is detected.
15. The inspection assistant of any preceding clause, wherein in generating the alert indicating that a defect associated with a component of the gas turbine engine is detected, the one or more processors of the inspection assistant are configured to: augment the images displayed on the human-machine interface with a defect graphic.
16. The inspection assistant of any preceding clause, wherein the defect graphic is overlaid over the defect detected.
17. A method of visually inspecting a gas turbine engine, the method comprising: capturing images of an interior of a core engine of the gas turbine engine with an optical probe installed through an access port of the gas turbine engine; receiving, by an inspection assistant, data that includes the images of the interior of the core engine; displaying, by the inspection assistant, the images on a display of the inspection assistant; detecting, by the inspection assistant, one or more defects associated with one or more components of the core engine; and generating, by the inspection assistant, an alert indicating that a defect associated with a component of the core engine is detected, and wherein the capturing, the receiving, the displaying, the detecting, and the generating occur in real time.
18. The method of any preceding clause, further comprising: displaying, by a scope monitor communicatively coupled with the optical probe, the images of the interior of the core engine, and wherein the images captured by the optical probe are simultaneously displayed on the scope monitor and the display of the inspection assistant.
19. The method of any preceding clause, wherein generating the alert indicating that a defect associated with a component of the gas turbine engine is detected comprises causing the inspection assistant to generate an audible alert indicating that a defect associated with a component of the gas turbine engine is detected.
20. The method of any preceding clause, wherein generating the alert indicating that a defect associated with a component of the gas turbine engine is detected comprises augmenting the images displayed on the display of the inspection assistant by overlaying a defect graphic over the defect detected.

## Claims

1. A system, comprising:
an optical system having an optical probe and a monitor communicatively coupled with the optical probe, the optical probe being insertable through an access port of a gas turbine engine and configured to capture images of an interior of the gas turbine engine at a location associated with the access port;
an inspection assistant communicatively coupled with the optical system, the inspection assistant having a human-machine interface, one or more processors, and one or more memory devices, the one or more processors of the inspection assistant being configured to:
(a) receive data including images captured by the optical probe, the images captured by the optical probe providing internal views of the gas turbine engine;
(b) cause the images to be displayed on the human-machine interface;
(c) detect one or more defects associated with one or more components of the gas turbine engine; and
(d) generate an alert indicating that a defect associated with a component of the gas turbine engine is detected, and
wherein the one or more processors of the inspection assistant (a) receive, (b) cause, (c) detect, and (d) generate the alert in real time.

2. The system of claim 1, wherein the optical system has a display communicatively coupled with the optical probe, and wherein the images captured by the optical probe are simultaneously displayed on the display and the human-machine interface of the inspection assistant.

3. The system of any preceding claim, wherein the one or more processors of the inspection assistant detect the one or more defects associated with one or more components of the gas turbine engine by executing an inspection analyzer module hosted on the inspection assistant.

4. The system of any preceding claim, further comprising:
a gateway communicatively coupled with the optical system and the inspection assistant, the gateway being configured to route the images captured by the optical probe to the inspection assistant.

5. The system of any preceding claim, wherein the one or more processors of the inspection assistant are further configured to:
provide instructions to an operator based at least in part on a selected work scope of an inspection on the gas turbine engine.

6. The system of any preceding claim, wherein in generating the alert indicating that a defect associated with a component of the gas turbine engine is detected, the one or more processors of the inspection assistant are configured to:
cause the inspection assistant to generate an audible alert that indicates a defect associated with a component of the gas turbine engine is detected.

7. The system of any preceding claim, wherein in generating the alert indicating that a defect associated with a component of the gas turbine engine is detected, the one or more processors of the inspection assistant are configured to:
augment the images displayed on the human-machine interface by overlaying a defect graphic over the defect detected.

8. An inspection assistant for aiding an operator during a visual inspection of a gas turbine engine, the inspection assistant comprising:
a human-machine interface having a display;
one or more memory devices;
one or more processors, the one or more processors of the inspection assistant being configured to:
(a) receive data including images captured of an interior of a core engine of the gas turbine engine;
(b) cause the images to be displayed on the display of the human-machine interface;
(c) detect one or more defects associated with one or more components of the core engine; and
(d) generate an alert indicating that a defect associated with a component of the gas turbine engine is detected, and
wherein the one or more processors of the inspection assistant (a) receive, (b) cause, (c) detect, and (d) generate in real time.

9. The inspection assistant of claim 8, wherein the inspection assistant is a handheld portable device.

10. The inspection assistant of claim 8 or 9, wherein in generating the alert indicating that a defect associated with a component of the gas turbine engine is detected, the one or more processors of the inspection assistant are configured to:
cause the inspection assistant to generate an audible alert that indicates a defect associated with a component of the gas turbine engine is detected.

11. The inspection assistant of any of claims 8 to 10, wherein in generating the alert indicating that a defect associated with a component of the gas turbine engine is detected, the one or more processors of the inspection assistant are configured to:
augment the images displayed on the human-machine interface with a defect graphic.

12. A method of visually inspecting a gas turbine engine, the method comprising:
capturing images of an interior of a core engine of the gas turbine engine with an optical probe installed through an access port of the gas turbine engine;
receiving, by an inspection assistant, data that includes the images of the interior of the core engine;
displaying, by the inspection assistant, the images on a display of the inspection assistant;
detecting, by the inspection assistant, one or more defects associated with one or more components of the core engine; and
generating, by the inspection assistant, an alert indicating that a defect associated with a component of the core engine is detected, and
wherein the capturing, the receiving, the displaying, the detecting, and the generating occur in real time.

13. The method of claim 12, further comprising:
displaying, by a scope monitor communicatively coupled with the optical probe, the images of the interior of the core engine, and
wherein the images captured by the optical probe are simultaneously displayed on the scope monitor and the display of the inspection assistant.

14. The method of claim 12 or 13, wherein generating the alert indicating that a defect associated with a component of the gas turbine engine is detected comprises causing the inspection assistant to generate an audible alert indicating that a defect associated with a component of the gas turbine engine is detected.

15. The method of any of claims 12 to 14, wherein generating the alert indicating that a defect associated with a component of the gas turbine engine is detected comprises augmenting the images displayed on the display of the inspection assistant by overlaying a defect graphic over the defect detected.
